# EUROPÄISCHE PATENTANMELDUNG

(11) **EP 2 487 673 A1**
(43) Veröffentlichungstag der Anmeldung: **15.08.2012**
(21) Anmeldenummer: 11190628.5
(22) Anmeldetag: 24.11.2011
(51) Int. Cl.: G09F 13/18, G09F 13/22, G09F 13/14

(54) **Rollfeldverkehrszeichen**

(30) Priorität: 14.02.2011 DE 102011000702
(71) Anmelder: Hella KGaA Hueck & Co, 59552 Lippstadt (DE)
(72) Erfinder: Bungenstock, Carmen, 33165 Kleinenberg (DE)
(74) Vertreter: Lohr, Georg

(57) **Zusammenfassung**

Die Erfindung betrifft ein Rollfeldverkehrszeichen (1 ), umfassend
- ein Gehäuse (2) mit einer Gehäuseöffnung,
- eine Anzahl von Leuchtmitteln (4), die im Inneren des Gehäuses (2) untergebracht sind und während des Betriebs des Rollfeldverkehrszeichens (1) Licht emittieren können, sowie
- eine zumindest abschnittsweise transparent oder transluzent ausgebildete Abdeckscheibe (3), wobei
- das Rollfeldverkehrszeichen (1) mindestens ein vorzugsweise plattenförmig ausgebildetes Lichtleitelement (6) aufweist, das im Inneren des Gehäuses (2) vor der Abdeckscheibe (3) angeordnet ist, und
- die Leuchtmittel (4) derart angeordnet sind, dass sie das Licht im Bereich mindestens einer Stirnseite (60,61) in das Lichtleitelement (6) einstrahlen können, so dass sich das Licht im Inneren des Lichtleitelements (6) ausbreiten kann,
wobei das Lichtleitelement (6) eine Vielzahl von Lichtlenkmittteln (7) umfasst, die so ausgebildet sind, dass sie das in das Lichtleitelement (6) eingestrahlte Licht derart reflektieren oder streuen können, dass das Licht zumindest teilweise quer zur Einstrahlrichtung an einer der Abdeckscheibe (3) zugewandten Vorderseite (62) aus dem Lichtleitelement (6) heraustreten kann und durch die Lichteintrittsfläche (31) in die Abdeckscheibe (3) hineintreten kann.

## Beschreibung

Die vorliegende Erfindung bezieht sich auf ein Rollfeldverkehrszeichen, umfassend ein Gehäuse mit einer Gehäuseöffnung, eine Anzahl von Leuchtmitteln, die im Inneren des Gehäuses untergebracht sind und während des Betriebs des Rollfeldverkehrszeichens Licht emittieren können, sowie eine zumindest abschnittsweise transparent oder transluzent ausgebildete Abdeckscheibe, mittels derer die Gehäuseöffnung und das Innere des Gehäuses abgedeckt sind und die eine Lichteintrittsfläche, eine Lichtaustrittsfläche sowie mindestens ein Symbolzeichen oder dergleichen auf der Lichtaustrittsfläche aufweist, wobei das von den Leuchtmitteln emittierte Licht durch die Abdeckscheibe transmittiert werden kann und an der Lichtaustrittsfläche der Abdeckscheibe austreten kann.

Es ist bekannt, dass an Rollbahnen und sonstigen Fahrflächen von Flughäfen so genannte Rollfeldverkehrszeichen vorzufinden sind, die insbesondere als Ziel- und Standortzeichen oder als Gebots- oder Verbotszeichen dienen. Derartige Rollfeldverkehrszeichen sind zur Information und zur Regulierung des Verkehrsflusses sowohl von Flugzeugen als auch von Kraftfahrzeugen auf den Rollbahnen oder den sonstigen Verkehrsflächen eines Flughafens vorgesehen. Anders als zum Beispiel im Straßenverkehr eingesetzte Verkehrszeichen müssen derartige Rollfeldverkehrszeichen von innen beleuchtet sein, damit sie insbesondere von Flugzeugführern rechtzeitig zu erkennen sind. Diese Rollfeldverkehrszeichen unterliegen international einheitlichen Anforderungen, die von der Internationalen Zivilluftfahrtorganisation (International Civil Aviation Organization (ICAO)) aufgestellt werden. Diese Anforderungen betreffen zum Beispiel die Leuchtdichte (Helligkeit), die Homogenität der Ausleuchtung sowie die Farberscheinung der Rollfeldverkehrszeichen.

Die aus dem Stand der Technik bekannten Rollfeldverkehrszeichen weisen ein Gehäuse auf, innerhalb dessen mehrere Leuchtmittel untergebracht sind. Den Abschluss des Gehäuses bildet eine transparente Abdeckscheibe, welche ihrerseits die eigentlichen Symbolzeichen trägt. Im Stand der Technik werden derzeit in der Regel Leuchtstofflampen oder auch Halogenlampen als Leuchtmittel zur Hinterleuchtung der Abdeckscheibe verwendet. Beispiele hierfür liefern die DE 94 12 944 U1, die US 2007/0204496 A1 sowie die US 6,946,975 B2.

Halogenlampen und Leuchtstofflampen (insbesondere Leuchtstoffröhren) haben den Nachteil, dass sie eine relativ hohe Leistungsaufnahme haben. Darüber hinaus weisen Halogenlampen und Leuchtstofflampen eine relativ kurze Lebensdauer auf, so dass mit derartigen Leuchtmitteln ausgestattete Rollfeldverkehrszeichen in kurzen Zeitintervallen gewartet werden müssen, da die Leuchtmittel häufig ausgetauscht werden müssen. Ferner führt die Verwendung von Halogenlampen und Leuchtstofflampen oft zu einer sehr ungleichmäßigen Ausleuchtung. So bilden sich zum Beispiel zwischen zwei benachbarten Leuchtstoffröhren, die für eine Hinterleuchtung der Abdeckscheibe des Rollfeldverkehrszeichens vorgesehen sind, dunklere unausgeleuchtete Bereiche. Um eine möglichst gleichmäßige, homogene Ausleuchtung erreichen zu können, benötigen Leuchtstoffröhren einen relativ großen Abstand zur Abschlussscheibe, so dass das Gehäuse des Rollfeldverkehrszeichens und damit auch das Rollfeldverkehrszeichen insgesamt eine große Bautiefe aufweisen. Häufig ist bei den aus dem Stand der Technik bekannten Rollfeldverkehrszeichen auf der Innenseite der Abschlussscheibe eine lichtstreuende Schicht angeordnet. Diese absorbiert allerdings einen hohen Anteil des von den Leuchtmitteln emittierten Lichts und führt dadurch zu einer Ineffizienz des gesamten System.

Hier setzt die vorliegende Erfindung an und macht es sich zur Aufgabe, ein Rollfeldverkehrszeichen der eingangs genannten Art zur Verfügung zu stellen, das kompakt ausgeführt ist und eine hohe Leuchtdichte bei gleichzeitig homogener Ausleuchtung aufweist.

Diese Aufgabe wird durch ein Rollfeldverkehrszeichen der eingangs genannten Art mit den Merkmalen des kennzeichnenden Teils des Anspruchs 1 gelöst. Die Unteransprüche betreffen vorteilhafte Weiterbildungen der Erfindung.

Ein erfindungsgemäßes Rollfeldverkehrszeichen zeichnet sich dadurch aus, dass
- das Rollfeldverkehrszeichen mindestens ein vorzugsweise plattenförmig ausgebildetes Lichtleitelement aufweist, das im Inneren des Gehäuses vor der Abdeckscheibe angeordnet ist, und
- die Leuchtmittel derart angeordnet sind, dass sie das Licht im Bereich mindestens einer Stirnseite in das Lichtleitelement einstrahlen können, so dass sich das Licht im Inneren des Lichtleitelements ausbreiten kann,
wobei das Lichtleitelement eine Vielzahl von Lichtlenkmittteln umfasst, die so ausgebildet sind, dass sie das in das Lichtleitelement eingestrahlte Licht derart reflektieren oder streuen können, dass das Licht zumindest teilweise quer zur Einstrahlrichtung an einer der Abdeckscheibe zugewandten Vorderseite aus dem Lichtleitelement heraustreten kann und durch die Lichteintrittsfläche in die Abdeckscheibe hineintreten kann. Die Lichtlenkmittel können insbesondere diffus reflektierend oder alternativ auch gerichtet reflektierend ausgebildet sein. Die hier vorgestellte erfindungsgemäße Lösung unterscheidet sich vom Stand der Technik insbesondere dadurch, dass sie auf einem andersartigen lichttechnischen Konzept beruht. Dieses Konzept basiert nicht auf einer direkten, sondern auf einer indirekten Hinterleuchtung der Abdeckscheibe des Gehäuses des Rollfeldverkehrszeichens mit Hilfe der Leuchtmittel. Das von den Leuchtmitteln emittierte Licht wird vor dem Hindurchtritt durch die Abdeckscheibe zunächst im Bereich mindestens einer Stirnseite in das Lichtleitelement, das vorzugsweise aus Kunststoff (insbesondere aus Polymethylmethacrylat (PMMA) oder aus Polycarbonat (PC)) hergestellt sein kann, eingestrahlt und mittels der Lichtlenkmittel derart reflektiert oder gestreut, dass es aus dem Lichtleitelement heraus über die Lichteintrittsfläche in die Abdeckscheibe hineintreten kann. Nach der Transmission durch die Abdeckscheibe tritt das Licht an der Lichtaustrittsfläche der Abdeckscheibe in die Umgebung aus. Das Lichtleitelement wird gleichmäßig und homogen beleuchtet, so dass auch die Abdeckscheibe in vorteilhafter Weise homogen und gleichmäßig durchleuchtet werden kann. Ein Vorteil der erfindungsgemäßen Lösung besteht darin, dass mit Hilfe des Lichtleitelements eine sehr gleichmäßige Hinterleuchtung der Abschlussscheibe erreicht werden kann, ohne dass zusätzlich stark streuende, aber lichtabsorbierende (und damit ineffiziente) Schichten auf der Lichteintrittsfläche der Abschlussscheibe zur Homogenisierung der Ausleuchtung erforderlich sind. Auf diese Weise können auch sehr große Flächen mit einer relativ geringen Anzahl von Leuchtmitteln gleichmäßig homogen ausgeleuchtet werden. Zudem zeichnet sich das erfindungsgemäße Rollfeldverkehrszeichen im Vergleich zum Stand der Technik durch eine kompakte, flache Bauweise aus.

In einer besonders vorteilhaften Ausführungsform wird vorgeschlagen, dass die Lichtlenkmitttel in oder an einer von der Abschlussscheibe abgewandten Rückseite des Lichtleitelements ausgebildet oder angeordnet sind. Dadurch kann eine sehr gleichmäßige und homogene Ausleuchtung des Lichtleitelements erreicht werden.

Vorzugsweise können die Lichtlenkmitttel in oder an der Rückseite des Lichtleitelements derart verteilt angeordnet beziehungsweise ausgebildet sein, dass sie in Einstrahlrichtung betrachtet mit zunehmender Tiefe einen zunehmend größeren Anteil an der Fläche der Rückseite des Lichtleitelements einnehmen. Die Flächendichte der Lichtlenkmittel nimmt also in Einstrahlrichtung des von den Leuchtmitteln emittierten Lichts mit zunehmender Tiefe zu.

Die Lichtlenkmitttel können vorteilhaft als konvexe, insbesondere halbkugelförmige, oder prismenartige Optikmittel oder als partielle Bedruckungen der Rückseite des Lichtleitelements ausgebildet sein. Partielle Bedruckungen, die lichtreflektierende Eigenschaften haben und insbesondere mit Hilfe weißer Lacke realisiert werden können, lassen sich auf der Rückseite des Lichtleitmittels sehr einfach herstellen. Die Bedruckungen können insbesondere derart verteilt auf der Rückseite des Lichtleitelements angeordnet sein, dass sie ein Raster, insbesondere ein Punktraster, bilden. Wenn die Lichtlenkmittel durch partielle (insbesondere rasterartige) Bedruckungen der Rückseite des Lichtleitelements realisiert sind, kann die Zunahme des Flächenanteils auf einfache Weise dadurch erreicht werden, dass die Durchmesser der aufgedruckten Lichtlenkmittel mit zunehmender Tiefe größer werden. Wenn die Lichtlenkmittel alternativ als in das Lichtleitelement eingeformte beziehungsweise daran angeformte konvexe (insbesondere halbkugelförmige) oder prismenartige Strukturen ausgebildet sind, kann die Zunahme der Flächendichte durch unterschiedliche Durchmesser und Höhen dieser Optikmittel erreicht werden.

In einer besonders bevorzugten Ausführungsform kann vorgesehen sein, dass die Leuchtmittel derart angeordnet sind, dass sie das Licht im Bereich zweier Stirnseiten, insbesondere im Bereich zweier einander gegenüberliegender Stirnseiten, in das Lichtleitelement einstrahlen können. Bei einander gegenüberliegender Stirnseiten, durch die das Licht in das Lichtleitelement eintritt, erstreckt sich der Bereich, innerhalb dessen die Flächendichte der Lichtlenkmittel zunimmt, vorzugsweise bis zur Hälfte der Rückseite des Lichtleitelements. Dort ist dann die Flächendichte der Lichtlenkmittel am größten. Die zweite Hälfte der Rückseite ist - von der Mitte aus betrachtet - vorzugsweise spiegelbildlich zur ersten Hälfte mit den Lichtlenkmitteln bestückt. Das bedeutet mit anderen Worten, dass die Flächendichte der Lichtlenkmittel von der zweiten Stirnseite zur Mitte der Rückseite des Lichtleitelements zunimmt.

Häufig ist der Reflexionsgrad der Lichtlenkmittel nicht 100%. Vielmehr tritt an den Lichtlenkmitteln ein gewisser Anteil des Lichts auf der Rückseite aus dem Lichtleitelement nach hinten aus. Um diesen Lichtanteil in vorteilhafter Weise lichttechnisch ebenfalls nutzen zu können, ist in einer besonders vorteilhaften Ausführungsform vorgesehen, dass im Inneren des Gehäuses hinter dem Lichtleitelement ein vorzugsweise plattenförmiges Reflexionselement mit einer Reflexionsfläche angeordnet ist, an der auf der Rückseite aus dem Lichtleitelement austretende Lichtstrahlen zum Lichtleitelement zurückreflektiert werden können. Die Reflexionsfläche des Reflexionselements kann gemäß einer ersten Variante diffus reflektierende Eigenschaften aufweisen. Das Licht, das auf die Reflexionsfläche des Reflexionselements trifft, wird dann diffus in Richtung des Lichtleitelements zurückreflektiert. Gemäß einer alternativen Ausführungsform kann die Reflexionsfläche auch (zumindest nahezu) ideal reflektierende Eigenschaften aufweisen, so dass das Licht gerichtet zum Lichtleitelement zurückreflektiert werden kann.

Um die Homogenität der Ausleuchtung des Lichtleitelements und damit auch der Abdeckscheibe weiter zu verbessern, ist in einer besonders bevorzugten Ausführungsform vorgesehen, dass jedem Leuchtmittel ein optisches Einkopplungsmittel zugeordnet ist, das so ausgebildet ist, dass es das von dem Leuchtmittel emittierte Licht vor und/oder nach dem Eintritt in die dem Leuchtmittel zugewandte Stirnseite des Lichtleitelements aufweiten kann. Die optischen Einkopplungsmittel können insbesondere Linsenmittel (zum Beispiel sphärische oder aspärische Linsensmittel oder Zylinderlinsenmittel), insbesondere zumindest abschnittsweise konkav geformte Linsenmittel sein. Um die Herstellung der optischen Einkopplungsmittel zu vereinfachen, ist in einer besonders vorteilhaften Ausführungsform vorgesehen, dass die optischen Einkopplungsmittel integral mit dem Lichtleitelement ausgebildet sind.

In einer besonders vorteilhaften Ausführungsform ist vorgesehen, dass die Leuchtmittel als Leuchtdioden ausgeführt sind. Durch den Einsatz von Leuchtdioden und durch das erfindungsgemäß verwendete lichttechnische Prinzip ergeben sich besondere Vorteile im Hinblick auf die Leistungsaufnahme der Leuchtmittel und die Lebensdauer im Vergleich zu den bisher eingesetzten (bei der hier vorgestellten Lösung grundsätzlich ebenfalls einsetzbaren) Halogenlampen oder Leuchtstofflampen. Würde man bei den aus dem Stand der Technik bekannten Rollfeldverkehrszeichen lediglich die dort eingesetzten Halogenlampen beziehungsweise Leuchtstofflampen durch Leuchtdioden ersetzen, ohne jedoch das erfindungsgemäß vorgesehene Lichtleitelement mit den Lichtlenkmitteln zu verwenden, so müsste bei der typischen Größe eines Rollfeldverkehrszeichen von etwa 0,8m x 0,8m bis 0,8m x 3m eine sehr große Anzahl dicht nebeneinander gepackter Leuchtdioden eingesetzt werden, um eine möglichst homogene, direkte Ausleuchtung der Abdeckscheibe zu erreichen. Dies ist insbesondere unter wirtschaftlichen Aspekten nicht mehr vorteilhaft und hebt den an sich vorhandenen Vorteil in Bezug auf die Leistungsaufnahmen gegenüber den Lösungen mit Halogen- oder Leuchtstofflampen wegen der großen Anzahl von Leuchtdioden wieder auf. Durch das hier vorgestellte Konzept kann mit einer vergleichsweise geringen Anzahl von Leuchtdioden eine gleichmäßige und homogene Ausleuchtung der Abdeckscheibe erreicht werden.

Anhand der beigefügten Zeichnungen wird die Erfindung nachfolgend näher erläutert. Dabei zeigt:
- Fig. 1: eine Vorderansicht eines Rollfeldverkehrszeichens, das gemäß einem bevorzugten Ausführungsbeispiel der vorliegenden Erfindung ausgeführt ist;
- Fig. 2: eine Detailansicht, die einen Lichteinkopplungsbereich des Rollfeldverkehrszeichens veranschaulicht;
- Fig.3: einen Schnitt in vertikaler Richtung durch das Rollfeldverkehrszeichen gemäß Fig. 1;
- Fig. 4a: eine Draufsicht auf ein Lichtleitelement des Rollfeldverkehrszeichens mit zwei Leuchtmitteln und zwei diesen zugeordneten optischen Einkopplungsmitteln, die gemäß einer ersten Variante ausgeführt sind;
- Fig. 4b: eine vergrößerte perspektivische Detailansicht, die das Lichtleitelement mit einem Leuchtmittel und einem diesem zugeordneten optischen Einkopplungsmittel veranschaulicht;
- Fig. 5: eine Draufsicht auf ein Lichtleitelement des Rollfeldverkehrszeichens mit zwei Leuchtmitteln und zwei diesen zugeordneten optischen Einkopplungsmitteln, die gemäß einer zweiten Variante ausgeführt sind;
- Fig. 6: eine Draufsicht auf ein Lichtleitelement des Rollfeldverkehrszeichens mit zwei Leuchtmitteln, wobei einem der beiden Leuchtmittel ein optisches Einkopplungsmittel gemäß der ersten Variante zugeordnet ist.

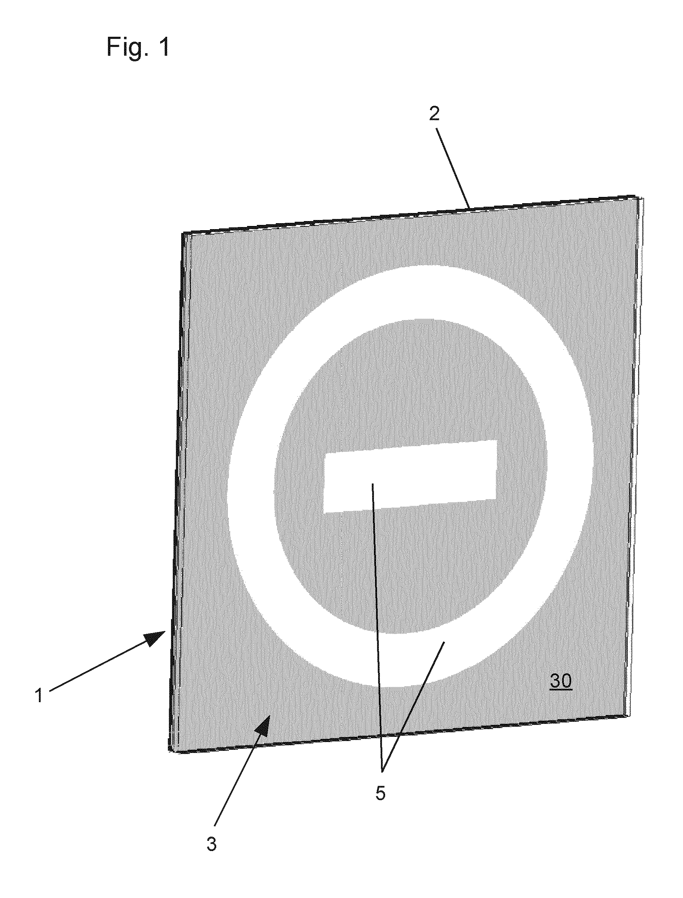

Unter Bezugnahme auf Fig. 1 bis 3 weist ein Rollfeldverkehrszeichen 1, das gemäß einem bevorzugten Ausführungsbeispiel der vorliegenden Erfindung ausgeführt ist, ein Gehäuse 2 mit einer Gehäuseöffnung auf, innerhalb dessen eine Mehrzahl von Leuchtmitteln 4 untergebracht ist. Den Abschluss des Gehäuses 2 bildet eine Abdeckscheibe 3, die innerhalb des Gehäuses 2 untergebracht ist und so die Gehäuseöffnung und einen Innenraum des Gehäuses 2 abdeckt. Die Abdeckscheibe 3 ist aus einem transparenten oder wahlweise auch aus einem transluzenten (halbtransparenten) Werkstoff, insbesondere aus Kunststoff, hergestellt. Das Gehäuse 2 und die Abdeckscheibe 3 weisen in diesem Ausführungsbeispiel einen rechteckigen Umriss auf. Andere Umrissformen sind alternativ auch möglich, wenngleich rechteckige (insbesondere quadratische) Grundformen bei Rollfeldverkehrszeichen 1 üblicher sind. Ferner besteht auch die Möglichkeit, dass die Abdeckscheibe 3 außen am Gehäuse 2 angebracht ist und den Innenraum sowie die Gehäuseöffnung abdeckt.

Während des Betriebs des Rollfeldverkehrszeichens 1 kann das Licht, welches von den Leuchtmitteln 4 emittiert wird, durch die transparente beziehungsweise transluzente Abdeckscheibe 3 in die Umgebung transmittiert werden. Die Abdeckscheibe 3 weist eine dem Innenraum des Gehäuses 2 zugewandte Lichteintrittsfläche 31 und eine Lichtaustrittsfläche 30 auf. Auf der Lichtaustrittsfläche 30 der Abdeckscheibe 3 ist ein Symbolzeichen 5 angeordnet, welches die Informationen, die mittels des Rollfeldverkehrszeichens 1 Flugzeug- beziehungsweise Fahrzeugführern geliefert werden sollen, darstellt und das - je nach Art des Rollfeldverkehrszeichens 1 - in einer bestimmten, durch internationale Normen festgelegten Farbe ausgeführt ist. Die übrigen Bereiche der Lichtaustrittsfläche 30 der Abdeckscheibe 3 sind in einer anderen Farbe als das Symbolzeichen 5 ausgeführt, um einen Farbkontrast zu liefern. Es gibt unterschiedliche Arten von Rollfeldverkehrszeichen 1: Beispielsweise besitzen so genannte Zielzeichen eine schwarze Schrift auf gelbem Untergrund. Standortzeichen weisen eine gelbe Schrift auf schwarzem Untergrund auf und Gebots- beziehungsweise Verbotszeichen haben eine weiße Schrift auf einem roten Grund. Die Farben können insbesondere durch Siebdruckverfahren auf der Lichtaustrittsfläche 30 der Abdeckscheibe 3 aufgetragen werden. Die Abdeckscheibe 3 ist mit Ausnahme schwarz eingefärbter Bereiche transparent beziehungsweise transluzent ausgeführt.

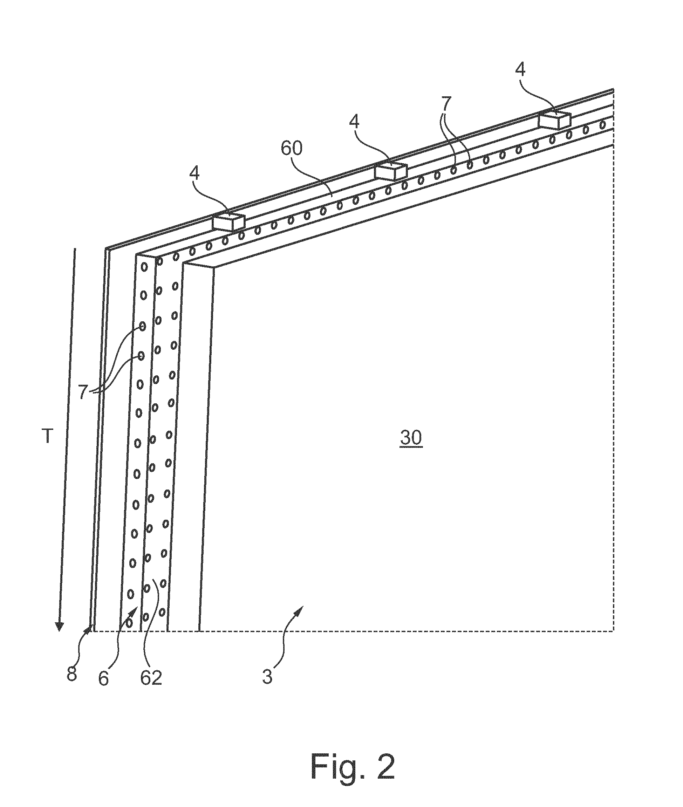

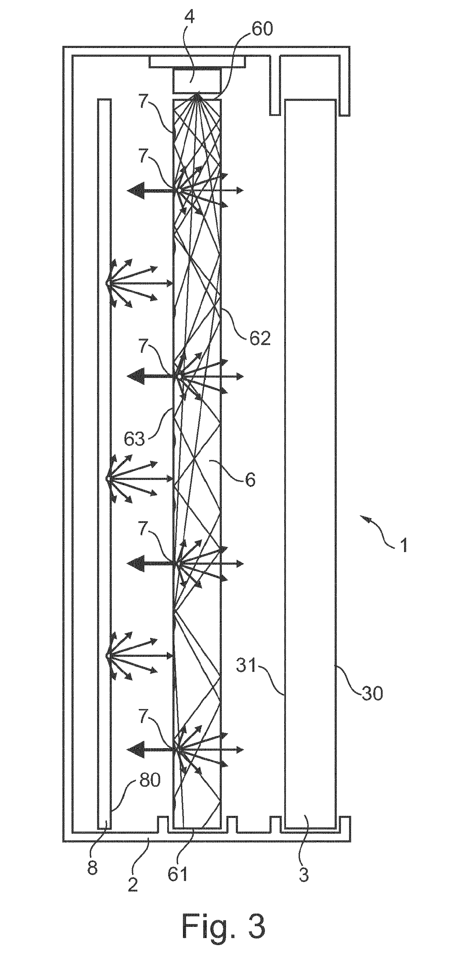

Unter Bezugnahme auf Fig. 2 und 3 ist im Inneren des Gehäuses 2 hinter der Abdeckscheibe 3 ein vorliegend plattenförmig ausgebildetes Lichtleitelement 6 aus einem transparenten Werkstoff, insbesondere aus einem transparenten Kunststoff angeordnet. Das Lichtleitelement 6 kann zum Beispiel aus Polymethylmethacrylat (PMMA) oder aus Polycarbonat (PC) hergestellt sein. Das plattenförmige Lichtleitelement 6 weist vorliegend eine rechteckige oder quadratische Grundform auf und ist derart dimensioniert, dass es im Inneren des Gehäuses 2 des Rollfeldverkehrszeichens 1 untergebracht werden kann. Vor einer ersten Stirnseite 60 des Lichtleitelements 6 sind mehrere über die gesamte Länge der ersten Stirnseite 60 voneinander beabstandete Leuchtmittel 4 angeordnet, die während des Betriebs Licht emittieren, welches stirnseitig in das Lichtleitelement 6 eingestrahlt wird und sich - wie in Fig. 3 veranschaulicht - im Inneren des Lichtleitelements 6 ausbreitet. Die Leuchtmittel 4 sind in dem hier gezeigten Ausführungsbeispiel als Leuchtdioden ausgeführt. Es können in alternativen Ausführungsformen auch andere Leuchtmitteltypen eingesetzt werden (zum Beispiel Halogenlampen oder Leuchtstofflampen).

Gemäß einer weiteren, hier nicht explizit dargestellten Ausführungsform besteht auch die Möglichkeit, dass zumindest vor einer weiteren (zweiten) Stirnseite 61 des Lichtleitelements 6 - vorzugsweise vor derjenigen Stirnseite 61, die der ersten Stirnseite 60 gegenüberliegt - zusätzlich mehrere, über die gesamte Länge dieser zweiten Stirnseite 61 voneinander beabstandete Leuchtmittel angeordnet sind. Diese Leuchtmittel können während des Betriebs des Rollfeldverkehrszeichens 1 Licht emittieren, welches ebenfalls stirnseitig in das Lichtleitelement 6 eingestrahlt wird und sich im Inneren des Lichtleitelements 6 ausbreitet. Diese Leuchtmittel sind vorzugsweise ebenfalls Leuchtdioden. Es können alternativ auch andere Leuchtmitteltypen eingesetzt werden (zum Beispiel Halogenlampen oder Leuchtstofflampen). Bei dieser Variante wird das Licht also über zwei (vorzugsweise einander gegenüberliegende) Stirnseiten 60, 61 in das Lichtleitelement 6 eingestrahlt.

Das plattenförmige Lichtleitelement 6 umfasst eine Vorderseite 62, die der Lichteintrittsfläche 31 der Abdeckscheibe 3 zugewandt ist, sowie eine Rückseite 63, die von der Abdeckscheibe 3 abgewandt ist und eine Vielzahl von Lichtlenkmitteln 7 aufweist, die so ausgeführt sind, dass sie das von den Leuchtmitteln 4 emittierte und sich innerhalb des Lichtleitelements 6 ausbreitende Licht zumindest teilweise in das Lichtleitelement 6 zurückreflektieren können. Die Lichtlenkmittel 7 können insbesondere an der Rückseite 63 des Lichtleitelements 6 angebracht oder daran angeformt sein. Es besteht auch die Möglichkeit, dass die Lichtlenkmittel 7 in der Rückseite 63 des Lichtleitelements 6 ausgebildet sind. Die Lichtlenkmittel 7 können zum Beispiel konvex (insbesondere halbkugelförmig) oder prismenartig ausgebildet sein. Des Weiteren ist es möglich, dass die Lichtlenkmittel 7 durch partielle Bedruckungen auf der Rückseite 63 des Lichtleitelements 6 gebildet werden. Derartige Bedruckungen, welche die gewünschten lichtlenkenden Eigenschaften besitzen, können zum Beispiel durch Aufbringen eines weißen Lacks erhalten werden. Die Bedruckungen auf der Rückseite 63 des Lichtleitelements 6 können insbesondere in Form eines Rasters (insbesondere eines Punktrasters) ausgeführt sein. In dem hier gezeigten Ausführungsbeispiel sind die Lichtlenkmittel 7 punktförmige Bedruckungen, die auf der Rückseite 63 des Lichtleitelements 6 ein Punktraster bilden. In weiteren Ausführungsformen sind auch andere Ausgestaltungen der Lichtlenkmittel 7 möglich.

Das von den Leuchtmitteln 4 während des Betriebs des Rollfeldverkehrszeichens 1 emittierte Licht tritt stirnseitig in das Lichtleitelement 6 ein und breitet sich - wie in Fig. 3 anhand mehrerer Teilstrahlen veranschaulicht - im Inneren des Lichtleitelements 6 aus. Fig. 3 zeigt schematisch stark vereinfachend mehrere Teilstrahlen, die - gegebenenfalls auch mehrfach - an der Vorderseite 62 und/oder an der Rückseite 63 des Lichtleitelements 6 reflektiert werden und im Bereich der Rückseite 63 des Lichtleitelements 6 auf die Lichtlenkmittel 7 treffen, an denen sie zumindest teilweise in das Lichtleitelement 6 zurückreflektiert werden und nach dem Hindurchtritt durch das Lichtleitelement 6 an dessen Vorderseite 62 quer zur Einstrahlrichtung der Leuchtmittel 4 austreten und auf diese Weise die Abdeckscheibe 3 homogen durchleuchten. Die Lichtlenkmittel 7, die diffus reflektierend oder alternativ auch gerichtet reflektierend ausgeführt sein können, sind an beziehungsweise im Bereich der Rückseite 63 des Lichtleitelements 6 derart verteilt angeordnet beziehungsweise ausgebildet, dass sie in Einstrahlrichtung betrachtet mit zunehmender Tiefe T einen zunehmend größeren Anteil an der Fläche der Rückseite 63 des Lichtleitelements 6 (kurz: eine größere Flächendichte) einnehmen. Wenn die Lichtlenkmittel 7 - wie oben bereits erläutert - durch partielle (insbesondere rasterartige) Bedruckungen der Rückseite 63 des Lichtleitelements 6 realisiert sind, kann die Zunahme des Flächenanteils auf einfache Weise dadurch erreicht werden, dass die Durchmesser der aufgedruckten Lichtauskopplungsmittel 7 mit zunehmender Tiefe T größer werden. Wenn die Lichtlenkmittel 7 alternativ als in das Lichtleitelement 6 eingeformte beziehungsweise daran angeformte konvexe (insbesondere halbkugelförmige) oder prismenartige Strukturen ausgebildet sind, kann die Zunahme der Flächendichte durch unterschiedliche Durchmesser und Höhen dieser Optikmittel erreicht werden.

Wenn das von den Leuchtmitteln 4 emittierte Licht - wie in Fig. 3 gezeigt - nur im Bereich der ersten Stirnseite 60 in das Lichtleitelement 6 eingestrahlt wird, erstreckt sich derjenige Bereich, innerhalb dessen die Flächendichte der Lichtlenkmittel 7 kontinuierlich zunimmt, in Hauptausbreitungsrichtung des eingestrahlten Lichts über die gesamte Tiefe des Lichtleitelements 6. Wenn demgegenüber die Einstrahlung des Lichts über zwei einander gegenüberliegende Stirnseiten 60, 61 erfolgt, erstreckt sich der Bereich, innerhalb dessen die Flächendichte der Lichtlenkmittel 7 zunimmt, bis zur Hälfte der Rückseite 63 des Lichtleitelements 6. Dort ist dann die Flächendichte der Lichtlenkmittel 7 am größten. Die zweite Hälfte der Rückseite 63 ist - von der Mitte aus betrachtet - vorzugsweise spiegelbildlich zur ersten Hälfte mit den Lichtlenkmitteln 7 bestückt. Das bedeutet mit anderen Worten, dass die Flächendichte der Lichtlenkmittel 7 von der zweiten Stirnseite 61 zur Mitte der Rückseite 63 des Lichtleitelements 6 zunimmt.

Durch die vorstehend beschriebene Ausgestaltung und vorliegend rasterartige Anordnung der Lichtlenkmittel 7 in beziehungsweise an der Rückseite 63 des Lichtleitelements 6 wird erreicht, dass das Lichtleitelement 6 über die gesamte Fläche eine sehr gleichmäßige, homogene Lichtabstrahlcharakteristik aufweist. Die vor dem Lichtleitelement 6 positionierte Abdeckscheibe 3 wird dadurch ebenfalls sehr gleichmäßig und homogen ausgeleuchtet. Die hier beschriebene Lösung ermöglicht es in vorteilhafter Weise, dass auf zusätzliche Diffusorschichten, die nach dem heutigen Stand der Technik auf der Lichteintrittsfläche der Abdeckscheibe 3 vorgesehen werden, um dadurch die nötige Homogenität der Ausleuchtung zu erzielen, verzichtet werden kann. Derartige Diffusorschichten absorbieren einen erheblichen Anteil des zur Ausleuchtung der Abdeckscheibe 3 eingesetzten Lichts und machen so die aus dem Stand der Technik bisher bekannten Rollfeldverkehrszeichen 1 unter lichttechnischen Gesichtspunkten ineffizient.

Häufig ist der Reflexionsgrad der Lichtlenkmittel 7 nicht 100%. Vielmehr tritt an den Lichtlenkmitteln 7 ein gewisser Anteil des Lichts auf der Rückseite 63 aus dem Lichtleitelement 6 nach hinten aus. Um diesen Lichtanteil in vorteilhafter Weise lichttechnisch ebenfalls nutzen zu können, ist im Inneren des Gehäuses 2 hinter dem Lichtleitelement 6 ein plattenförmiges Reflexionselement 8 mit einer Reflexionsfläche 80 angeordnet, welche lichtreflektierende Eigenschaften aufweist. Die auf der Rückseite 63 aus dem Lichtleitelement 6 austretenden Strahlanteile treffen - wie in Fig. 3 zu erkennen - auf die Reflexionsfläche 80 des Reflexionselements 8 und werden an dieser zurückreflektiert und dann durch das Lichtleitelement 6 auf die Abdeckscheibe 3 gelenkt und treten an der Lichtaustrittsfläche 30 aus der Abdeckscheibe 3 aus. Die Reflexionsfläche 80 des Reflexionselements 8 kann gemäß einer ersten Variante diffus reflektierende Eigenschaften aufweisen, wie sie in Fig. 3 dargestellt sind. Das Licht, das auf die Reflexionsfläche 80 des Reflexionselements 8 trifft, wird somit diffus in Richtung des Lichtleitelements 6 zurückreflektiert. Gemäß einer alternativen, hier nicht explizit dargestellten Ausführungsform kann die Reflexionsfläche 80 auch (zumindest nahezu) ideal reflektierende Eigenschaften aufweisen, so dass das Licht gerichtet zum Lichtleitelement 6 zurückreflektiert werden kann.

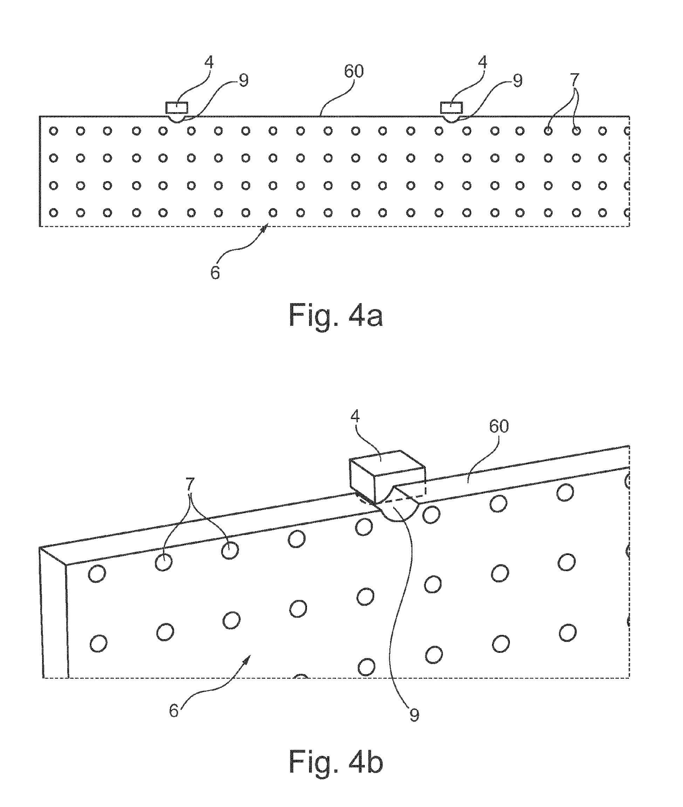

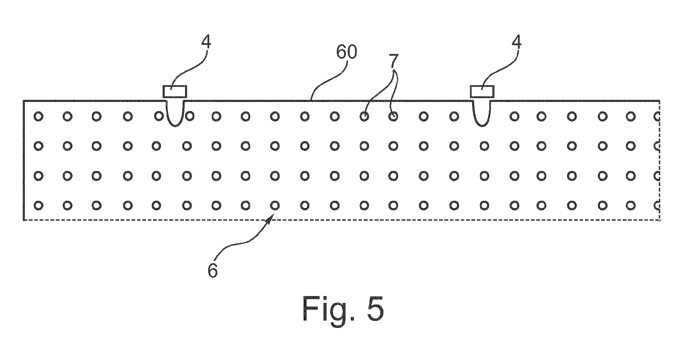

Um die Homogenität der Ausleuchtung der Abdeckscheibe 3 weiter zu verbessern, besteht unter weiterer Bezugnahme auf Fig. 4a bis Fig. 6 die Möglichkeit, dass das von den Leuchtmitteln 4 emittierte Licht mit Hilfe optischer Einkopplungsmittel 9 in das Lichtleitelement 6 eingekoppelt wird. Die optischen Einkopplungsmittel 9 können separate Bauteile sein, die zwischen den Leuchtmitteln 4 und derjenigen Stirnseite 60, 61, durch die das Licht in das Lichtleitelement 6 eintritt, angeordnet sind. Die optischen Einkopplungsmittel 9 können - wie in Fig. 4a bis Fig. 6 gezeigt - in besonders vorteilhafter Weise integral mit dem Lichtleitelement 6 ausgebildet sein. Vorliegend sind die optischen Einkopplungsmittel 9 als rinnenartige Vertiefungen in der Stirnseite 60 des Lichtleitelements 6 ausgebildet. Wie in Fig. 4b zu erkennen, erstrecken sich die rinnenartigen Vertiefungen, die die optischen Einkopplungsmittel 9 bilden, vorliegend über die gesamte Dicke des Lichtleitelements 6. Gemäß der in Fig. 4a und 4b gezeigten Variante weisen die optischen Einkopplungsmittel 9 einen teilkreisförmigen (insbesondere einen halbkreisförmigen) Querschnitt auf. Gemäß der Variante in Fig. 5 weisen die optischen Einkopplungsmittel 9 eine langgestreckte, bogenförmige Kontur auf, so dass der Querschnitt die Form eines Teilovals besitzt. Die optischen Einkopplungsmittel 9 bilden in beiden Varianten konkave Zylinderlinsen, die optisch als Zerstreuungslinsen wirken und so das von den Leuchtmitteln 4 emittierte Licht beim Eintritt in die jeweilige Stirnseite 60, 61 des Lichtleitelements 6 aufweiten. Mit Hilfe der in der vorstehend beschriebenen Weise gestalteten optischen Einkopplungsmittel 9 wird somit bereits im Bereich der Lichteinkopplung in das Lichtleitelement 6 eine relativ breite, gleichmäßige Strahlverteilung erzeugt. An Stelle der vorstehend beschriebenen, optisch als Zylinderlinsen wirkenden optischen Einkopplungsmittel 9 können auch anders gestaltete optische Einkopplungsmittel 9 (zum Beispiel konkav geformte sphärische oder asphärische Linsenmittel) eingesetzt werden, die zerstreuend wirken und das von den Leuchtmitteln 4 emittierte Licht beim Eintritt in die betreffende Stirnseite 60, 61 des Lichtleitelements 6 aufweiten können.

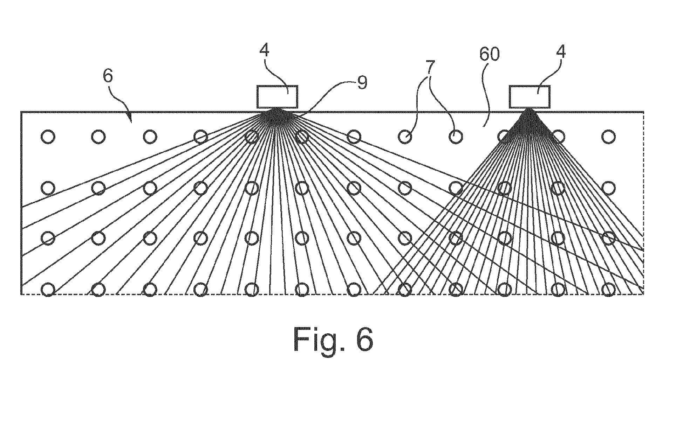

Unter Bezugnahme auf Fig. 6 sind dort die unterschiedlichen Strahlverläufe bei der Einkopplung des von den Leuchtmitteln 4 emittierten Lichts in das Lichtleitelement 6 mit (in Fig. 6 links) und ohne (in Fig. 6 rechts) optisches Einkopplungsmittel 9 gezeigt. Es wird deutlich, dass die einzelnen Teilstrahlen im Fall der Verwendung eines optischen Einkopplungsmittels 9 innerhalb des Lichtleitelements 6 im stirnseitigen Bereich der Lichteinkopplung wesentlich breiter verteilt verlaufen und bereits hier auf die Lichtlenkmittel 7 treffen. Ohne optische Einkopplungsmittel 9 verlaufen die Teilstrahlen im Inneren des plattenförmigen Lichtleitelements 6 demgegenüber viel enger gebündelt. Um dunkle, nicht leuchtende Abschnitte im Einkoppelbereich des Lichtleitelements 6 zu vermeiden, muss ohne optische Einkopplungsmittel 9 ein möglichst geringer Abstand der Leuchtmittel 4 von der Stirnseite 60, 61 des Lichtleitelements 6 gewählt werden. Dies bedingt dann eine entsprechend größere Anzahl von Leuchtmitteln 4, die verwendet werden müssen, um die gewünschte gleichmäßige und homogene Ausleuchtung zu erreichen. Bei Verwendung optischer Einkopplungsmittel 9 kann demgegenüber die Anzahl der Leuchtmittel 4 reduziert werden.

### Bezugszeichenliste

- 1: Rollfeldverkehrszeichen
- 2: Gehäuse
- 3: Abdeckscheibe
- 4: Leuchtmittel
- 5: Symbolzeichen
- 6: Lichtleitelement
- 7: Lichtlenkmittel
- 8: Reflexionselement
- 9: optisches Einkopplungsmittel
- 30: Lichtaustrittsfläche
- 31: Lichteintrittsfläche
- 60: erste Stirnseite
- 61: zweite Stirnseite
- 62: Vorderseite
- 63: Rückseite
- 80: Reflexionsfläche

## Patentansprüche

1. Rollfeldverkehrszeichen (1), umfassend
- ein Gehäuse (2) mit einer Gehäuseöffnung,
- eine Anzahl von Leuchtmitteln (4), die im Inneren des Gehäuses (2) untergebracht sind und während des Betriebs des Rollfeldverkehrszeichens (1) Licht emittieren können, sowie
- eine zumindest abschnittsweise transparent oder transluzent ausgebildete Abdeckscheibe (3), mittels derer die Gehäuseöffnung und das Innere des Gehäuses (2) abgedeckt sind und die eine Lichteintrittsfläche (31), eine Lichtaustrittsfläche (30) sowie mindestens ein Symbolzeichen (5) oder dergleichen auf der Lichtaustrittsfläche (30) aufweist, wobei das von den Leuchtmitteln (4) emittierte Licht durch die Abdeckscheibe (3) transmittiert werden kann und an der Lichtaustrittsfläche (30) der Abdeckscheibe (3) austreten kann, **dadurch gekennzeichnet, dass**
- das Rollfeldverkehrszeichen (1) mindestens ein vorzugsweise plattenförmig ausgebildetes Lichtleitelement (6) aufweist, das im Inneren des Gehäuses (2) vor der Abdeckscheibe (3) angeordnet ist, und
- die Leuchtmittel (4) derart angeordnet sind, dass sie das Licht im Bereich mindestens einer Stirnseite (60, 61) in das Lichtleitelement (6) einstrahlen können, so dass sich das Licht im Inneren des Lichtleitelements (6) ausbreiten kann,
wobei das Lichtleitelement (6) eine Vielzahl von Lichtlenkmittteln (7) umfasst, die so ausgebildet sind, dass sie das in das Lichtleitelement (6) eingestrahlte Licht derart reflektieren oder streuen können, dass das Licht zumindest teilweise quer zur Einstrahlrichtung an einer der Abdeckscheibe (3) zugewandten Vorderseite (62) aus dem Lichtleitelement (6) heraustreten kann und durch die Lichteintrittsfläche (31) in die Abdeckscheibe (3) hineintreten kann.

2. Rollfeldverkehrszeichen (1) nach Anspruch 1, **dadurch gekennzeichnet, dass** die Lichtlenkmitttel (7) in oder an einer von der Abschlussscheibe (3) abgewandten Rückseite (63) des Lichtleitelements (6) ausgebildet oder angeordnet sind.

3. Rollfeldverkehrszeichen (1) nach Anspruch 2, **dadurch gekennzeichnet, dass** die Lichtlenkmitttel (7) in oder an der Rückseite (63) des Lichtleitelements (6) derart verteilt angeordnet beziehungsweise ausgebildet sind, dass sie in Einstrahlrichtung betrachtet mit zunehmender Tiefe einen zunehmend größeren Anteil an der Fläche der Rückseite (63) des Lichtleitelements (6) einnehmen.

4. Rollfeldverkehrszeichen (1) nach einem der Ansprüche 1 bis 3, **dadurch gekennzeichnet, dass** die Lichtlenkmitttel (7) als konvexe, insbesondere halbkugelförmige, oder prismenartige Optikmittel oder als partielle Bedruckungen der Rückseite (63) des Lichtleitelements (6) ausgebildet sind.

5. Rollfeldverkehrszeichen (1) nach Anspruch 4, **dadurch gekennzeichnet, dass** die Bedruckungen so auf der Rückseite (63) des Lichtleitelements (6) verteilt sind, dass sie ein Raster, insbesondere ein Punktraster, bilden.

6. Rollfeldverkehrszeichen (1) nach einem der Ansprüche 1 bis 5, **dadurch gekennzeichnet, dass** die Leuchtmittel (4) derart angeordnet sind, dass sie das Licht im Bereich zweier Stirnseiten (60, 61), insbesondere im Bereich zweier einander gegenüberliegender Stirnseiten (60, 61), in das Lichtleitelement (6) einstrahlen können.

7. Rollfeldverkehrszeichen (1) nach einem der Ansprüche 1 bis 6, **dadurch gekennzeichnet, dass** im Inneren des Gehäuses (2) hinter dem Lichtleitelement (6) ein vorzugsweise plattenförmiges Reflexionselement (8) mit einer Reflexionsfläche (80) angeordnet ist, an der auf der Rückseite (63) aus dem Lichtleitelement (6) austretende Lichtstrahlen zum Lichtleitelement (6) zurückreflektiert werden können.

8. Rollfeldverkehrszeichen (1) nach einem der Ansprüche 1 bis 7, **dadurch gekennzeichnet, dass** jedem Leuchtmittel (4) ein optisches Einkopplungsmittel (9) zugeordnet ist, das so ausgebildet ist, dass es das von dem Leuchtmittel (4) emittierte Licht vor und/oder nach dem Eintritt in die dem Leuchtmittel (4) zugewandte Stirnseite (60, 61) des Lichtleitelements (6) aufweiten kann.

9. Rollfeldverkehrszeichen (1) nach Anspruch 8, **dadurch gekennzeichnet, dass** die optischen Einkopplungsmittel (9) integral mit dem Lichtleitelement (6) ausgebildet sind.

10. Rollfeldverkehrszeichen (1) nach einem der Ansprüche 1 bis 9, **dadurch gekennzeichnet, dass** die Leuchtmittel (6) Leuchtdioden sind.
